Europäisches Patentamt

**European Patent Office**

**Office européen des brevets**

(19)

(11) Numéro de publication:

**0 006 411**
**A1**

# (12) DEMANDE DE BREVET EUROPEEN

(21) Numéro de dépôt: 78400036.6

(51) Int. Cl.³: **C 05 G 1/00**

(22) Date de dépôt: 27.06.78

(43) Date de publication de la demande: **09.01.80**
**Bulletin 80/1**

(84) Etats contractants désignés: **BE CH DE GB LU NL SE**

(71) Demandeur: **Frossard, Patrice, 10, rue des Vignes,**
**F-21800 Quetigny (FR)**

(72) Inventeur: **Frossard, Patrice, 10, rue des Vignes,**
**F-21800 Quetigny (FR)**

(74) Mandataire: **Laloe, Michel, 3, rue Vaillant, F-21000**
**Dijon (FR)**

(54) **Préparation pour la nutrition des plantes.**

(57) Préparation pour la nutrition des plantes, telles que plantes en pot, par fertilisation des sols, comportant une solution aqueuse de sulfate de fer ferreux à sept molécules d'eau à raison de 25 mg/l, de dihydrogénophosphate de sodium à une molécule d'eau à raison de 275 mg/l, d'hydrogénophosphate de di-sodium à deux molécules d'eau à raison de 33 mg/l et d'acide éthylènedinitrilotétraacétique, sel disodique dihydraté, à raison de 18,5 mg/l, ces proportions étant définies à 7,5% près par défaut ou par excès.

- 1 -

PREPARATION POUR LA NUTRITION DES PLANTES

L'invention appartient au domaine de la nutrition des plantes. Elle concerne une préparation sous forme de solution aqueuse contenant une proportion choisie de sels minéraux.

L'inventeur n'a pas connaissance de préparation répondant au même objet que la sienne et contenant les sels minéraux qui y sont contenus.

La préparation de l'invention est caractérisée en ce qu'elle contient, entre autres constituants, du sulfate de fer ferreux à sept molécules d'eau, du dihydrogénophosphate de sodium à une ou deux molécules d'eau, de l'hydrogénophosphate de di-sodium à deux molécules d'eau, et de l'acide éthylènedinitrilotétraacétique.

Elle présente le double avantage d'être utilisable pour la fertilisation des terres et des sols et d'avoir des vertus nutritives et curatives au niveau des plantes. Elle est donc bien adaptée pour la culture des plantes en pot en particulier.

Suivant une caractéristique de l'invention, la préparation contient des ions positifs et en particulier des ions calcium, ammonium, potassium, magnésium, cobalt, zinc, manganèse et cuivre. Suivant une autre caractéristique, la préparation contient en outre de l'acide borique et du glucose ou de la saccharose.

La préparation de l'invention est, de préférence, obtenue par le mélange des constituants suivants donnés
avec leur taux de concentration par litre de préparation :

Nitrate de calcium : $(NO_3)_2$ Ca, 4 $H_2O$ : 612 mg/l
Nitrate d'ammonium : $NO_3$ $NH_4$ : 330 mg/l
Nitrate de potassium : $NO_3$ K : 252 mg/l
Dihydrogénophosphate de potassium : $PO_4$ $H_2$K: 125 mg/l
Sulfate de magnésium : $SO_4$ $M_g$, 7 $H_2O$ : 100 mg/l
Chlorure de cobalt : Co $Cl_2$, 6 $H_2O$ : 1,25 mg/l
Sulfate de zinc : Zn $SO_4$, 7 $H_2O$ : 5 mg/l
Sulfate de manganèse : Mn $SO_4$, 4 $H_2O$ : 10 mg/l
Acide borique : $BO_3$ $H_3$ : 5 mg/l
Sulfate de cuivre : Cu $SO_4$, 5 $H_2O$ : 1,25 mg/l
Chlorure de calcium : $Cl_2$ Ca, 2 $H_2O$ : 88 mg/l
Sulfate de fer ferreux : Fe $SO_4$, 7 $H_2O$ : 25 mg/l
Saccharose ou glucose : 2.500 mg/l
Dihydrogénophosphate de sodium :
$PO_4H_2$ Na, $H_2O$ : 275 mg/l
ou : $PO_4H_2$ Na, 2 $H_2O$ : 310 mg/l
Hydrogénophosphate de di-sodium :
$PO_4H$ $Na_2$, 2 $H_2O$ : 33 mg/l
Acide éthylènedinitrilotétraacétique :
$C_{10}H_{14}N_2Na_2O_8$ : 18,5 mg/l
(sel disodique dihydraté)
Eau : QSP 1 1

Les proportions indiquées ci-dessus pour les différents constituants sont définies à 7,5% près par défaut ou
par excès, ceci sans influence décelable sur les qualités
de la préparation. Son p.H. est alors voisin de 5,15 à
0,10 près.

A titre indicatif, il convient d'ajouter, pour la
bonne nutrition d'une plante dans un pot dont la contenance
est de l'ordre d'un litre, une préparation conforme à l'invention dont le volume total est de l'ordre de 25 ml, et
ceci à raison de deux fois par semaine environ. Il est à
noter que cette quantité de préparation peut être éventuellement adjointe à l'eau nécessaire à l'arrosage de la
plante.

L'invention n'est pas limitée à la préparation

0006411

ci-dessus décrite se présentant sous forme aqueuse. Elle concerne aussi la même préparation sous forme d'un mélange de constituants solides. Son utilisation pour la nutrition des plantes se fait alors par adjonction de la quantité d'eau nécessaire, agitation et emploi des doses voulues, comme par exemple celle indiquée plus haut, 25 ml, pour une plante en pot d'un litre.

0006411

- 1 -

<u>REVENDICATIONS DE BREVET</u>

1.- Préparation pour la nutrition des plantes, telles que plantes en pot, par fertilisation des sols, caractérisée:
- en ce qu'elle comporte une solution aqueuse de sulfate de fer ferreux à sept molécules d'eau à raison de 25 mg/l, de dihydrogénophosphate de sodium à une molécule d'eau à raison de 275 mg/l, d'hydrogénophosphate de di-sodium à deux molécules d'eau à raison de 33 mg/l et d'acide éthylènedinitrilotétraacétique, sel disodique dihydraté, à raison de 18,5 mg/l, ces proportions étant définies à 7,5 % près par défaut ou par excès.

2.- Préparation pour la nutrition des plantes, telles que plantes en pot, par fertilisation des sols, caractérisée :
- en ce qu'elle comporte une solution aqueuse de sulfate de fer ferreux à sept molécules d'eau à raison de 25 mg/l, de dihydrogénophosphate de sodium à deux molécules d'eau à raison de 310 mg/l, d'hydrogénophosphate de di-sodium à deux molécules d'eau à raison de 33 mg/l et d'acide éthylènedinitrilotétraacétique, sel disodique dihydraté, à raison de 18,5 mg/l, ces proportions étant définies à 7,5 % près par défaut ou pas excès.

3.- Préparation selon l'une des revendications 1 et 2, caractérisée :
- en ce qu'elle incorpore en outre des ions calcium, ammonium, potassium, magnésium, cobalt, sodium, zinc, manganèse et cuivre.

4.- Préparation selon la revendication 3, caractérisée :
- en ce qu'elle est définie par le mélange des constituants suivants donnés avec leur taux de concentration par litre :

| Constituant | Formule | | Concentration |
|---|---|---|---|
| Nitrate de calcium : | $(NO_3)_2$ Ca, 4 $H_2O$ | : | 612 mg/l |
| Nitrate d'ammonium : | $NO_3$ $NH_4$ | : | 330 mg/l |
| Nitrate de potassium : | $NO_3$ K | : | 252 mg/l |
| Dihydrogénophosphate de potassium : | $PO_4$ $H_2$K | : | 125 mg/l |
| Sulfate de magnésium : | $SO_4$ Mg, 7 $H_2O$ | : | 100 mg/l |
| Chlorure de cobalt : | Co $Cl_2$, 6 $H_2O$ | : | 1,25 mg/l |
| Sulfate de zinc : | Zn $SO_4$, 7 $H_2O$ | : | 5 mg/l |

Sulfate de manganèse : Mn $SO_4$, 4 $H_2O$     :     10    mg/l

Acide borique : $BO_3$ $H_3$     :     5    mg/l

Sulfate de cuivre : Cu $SO_4$, 5 $H_2O$     :     1,25 mg/l

Chlorure de calcium : $Cl_2$ Ca, 2 $H_2O$     :     88    mg/l

Sulfate de fer ferreux : Fe $SO_4$, 7 $H_2O$     :     25    mg/l

Saccharose     :   2.500    mg/l

Dihydrogénophosphate de sodium :

       $PO_4H_2Na$, $H_2O$     :     275    mg/l

     ou :   $PO_4H_2Na$, 2 $H_2O$     :     310    mg/l

Hydrogénophosphate de di-sodium :

       $PO_4$ $HNa_2$, 2 $H_2O$     :     33    mg/l

Acide éthylènedinitrilotétraacétique :

       $C_{10}$, $H_{14}N_2Na_2O_8$     :     18,5    mg/l

   (sel disodique dihydraté)

Eau     :    QSP    1 l

     Les taux de concentration ci-dessus étant définis à 7,5 % près par défaut ou pas excès.

     5.- Préparation pour la nutrition des plantes, caractérisée :

- en ce qu'elle contient les mêmes constituants que ceux de la préparation de la revendication 4, selon les mêmes proportions, avec la même tolérance de 7,5 %, mais où la saccharose est remplacée par le glucose à raison de 2.500 mg/l à 7,5 % près.

Office européen des brevets

**RAPPORT DE RECHERCHE EUROPEENNE**

0006411

Numéro de la demande

EP 78 40 0036

| | DOCUMENTS CONSIDERES COMME PERTINENTS | | CLASSEMENT DE LA DEMANDE (Int. Cl.³) |
|---|---|---|---|
| Categorie | Citation du document avec indication, en cas de besoin, des parties pertinentes | Revendication concernee | |
| A | FR - A - 1 406 722 (GRACE) | | C 05 G 1/00 |
| A | US - A - 2 869 996 (VIERLING) | | |
| A | US - A - 3 155 454 (SALUTSKY) | | |
| A | NL - A - 273 251 (GRACE) | | |
| | ---- | | |

**DOMAINES TECHNIQUES RECHERCHES (Int. Cl.³)**

C 05 B 7/00
C 05 G 1/00

**CATEGORIE DES DOCUMENTS CITES**

X: particulièrement pertinent
A: arrière-plan technologique
O: divulgation non-ecrite
P: document intercalaire
T: theorie ou principe a la base de l'invention
E: demande faisant interference
D: document cite dans la demande
L: document cite pour d'autres raisons
&: membre de la même famille, document correspondant

Le present rapport de recherche a ete etabli pour toutes les revendications

| Lieu de la recherche | Date d'achevement de la recherche | Examinateur |
|---|---|---|
| La Haye | 02-10-1979 | STEELANDT |

OEB Form 1503.1 06.78